# EUROPÄISCHE PATENTANMELDUNG

(11) **EP 2 700 539 A1**
(43) Veröffentlichungstag der Anmeldung: **26.02.2014**
(21) Anmeldenummer: 12181361.2
(22) Anmeldetag: 22.08.2012
(51) Int. Cl.: B60Q 3/02, B60N 3/04

(54) **Fußraumleuchte für Kraft/Nutzfahrzeuge jeglicher Art sowie Verfahren zu deren Einbau**

(71) Anmelder: Marbach, Daniel, 45770 Marl (DE)
(72) Erfinder: Marbach, Daniel, 45770 Marl (DE)
(74) Vertreter: Bonsmann, Joachim Bernhard

(57) **Zusammenfassung**

Die Erfindung betrifft eine Fußraumleuchte (6, 14, 16, 18, 20, 22, 24) zum Beleuchten des Fußraums eines Kraft- oder Nutzfahrzeugs, welche dafür eingerichtet ist, in eine Fußmatte (2) für einen Fußraumboden (4) des Kraft- oder Nutzfahrzeugs integriert zu werden. Die Fußraumleuchte (6, 14, 16, 18, 20, 22, 24) ist als eine flache, flächig und diffus leuchtende Leuchte ausgebildet, die dafür eingerichtet ist, mit ihrer Unterseite innerhalb des für die Fußmatte (2) vorgesehenen Fußraumbodenbereichs fest auf dem Fußraumboden (4) des Kraftfahrzeugs angebracht zu werden, und die außerdem dafür eingerichtet ist, einer Fußmatte (2), die mit einem dem Umriss der Fußraumleuchte entsprechenden Ausschnitt (32) versehen ist, durch Formschluss Seitenhalt zu geben.

## Beschreibung

Die Erfindung betrifft eine Fußraumleuchte zum Beleuchten des Fußraums eines Kraft- oder Nutzfahrzeuges jeglicher Art, welche dafür eingerichtet ist, in eine Fußmatte für einen Fußraumboden des Kraft/Nutzfahrzeugs integriert zu werden, sowie ein Verfahren zu deren Einbau gemäß den Oberbegriffen der unabhängigen Ansprüche.

Fußraumleuchten, die in eine Fußmatte integriert sind, indem die Fußmatte mit LEDs oder LED-Ketten versehen ist, sind aus der DE 20 2006 003 452 U1 und aus der DE 20 2010 004 145 U1 bekannt.

Der Erfindung liegt die Aufgabe zugrunde, eine Fußraumleuchte, die einen über die eigentliche Fußraumbeleuchtung hinausgehenden Nutzen hat, sowie ein einfaches und sicheres Verfahren zu deren Einbau bereitzustellen.

Diese Aufgabe wird durch eine Fußraumleuchte und ein Einbauverfahren gemäß den unabhängigen Ansprüchen gelöst.

Vorteilhafte Weiterbildungen der Erfindung sind in den abhängigen Ansprüchen angegeben.

Indem die Fußraumleuchte erfindungsgemäß als eine flache, flächig und im Wesentlichen diffus leuchtende Leuchte ausgebildet ist, die dafür eingerichtet ist, mit ihrer Unterseite innerhalb des für die Fußmatte vorgesehenen Fußraumbodenbereichs fest auf dem Fußraumboden des Kraft/Nutzfahrzeugs angebracht zu werden, kann die Fußraumleuchte einer auf den Fußraumboden gelegten Fußmatte, die mit einem dem Umriss der Fußraumleuchte entsprechenden Ausschnitt versehen ist, den die Fußraumleuchte ausfüllt, zusätzlichen Halt geben. Außerdem kann ggf. auf separate Fußmattenbefestigungselemente verzichtet werden oder deren Zahl zumindest reduziert werden, was das Herausnehmen der Fußmatte z.B. zu Reinigungszwecken erleichtert.

Eine auf der Fahrerseite angebrachte erfindungsgemäße Fußraumleuchte erhöht auch die Fahrzeugsicherheit, weil dort ein Verrutschen der Fußmatte zu einem Blockieren von Fahrpedalen und damit zu schweren Unfällen führen kann.

Außerdem ermöglicht die flächige und im Wesentlichen diffuse Beleuchtung eine gleichmäßige, eher indirekte Ausleuchtung des Fußraums ohne störende Blendeffekte, wie sie bei direkt abstrahlenden LEDs oder LED-Ketten auftreten können.

Zusätzlich ermöglicht es die Erfindung, auf einfache und haltbare Weise beliebige flächige Motive in die Fußmattenbeleuchtung zu integrieren und hintergrundbeleuchtet darzustellen, wie z.B. ansprechende zweidimensionale Muster und/oder Hersteller-Embleme.

"Im Wesentlichen diffuse Beleuchtung" soll bedeuten, dass ein Großteil der eigentlichen Lichtleistung (z.B. über 75%) diffus abgestrahlt wird. Einzelne, ohne Diffusor direkt sichtbare LEDs z.B. zur Hervorhebung von Konturen des Herstellerlogos oder zur Schaffung eines "Sternenhimmelhintergrunds" sind möglich.

Die Lichtfarbe der LEDs ist bevorzugt auf die Lichtfarbe der sonstigen Innenraumbeleuchtung abgestimmt. Zusätzlich sind durch Verwendung von RGB-Leuchtdioden auch Farbwechseleffekte möglich.

Insbesondere können, sofern die entsprechende Einbindung in die Fahrzeugelektrik möglich ist, zwei verschiedene Beleuchtungsszenarien bei der Fußraumleuchte vorgesehen sein, zum einen eine wirkliche Innenraumbeleuchtung, die zusammen mit der übrigen Innenraumbeleuchtung des Fahrzeuges aktiviert wird, und zum anderen eine Effektbeleuchtung, die zusammen mit der Instrumentenbeleuchtung bzw. dem Abblendlicht aktiviert wird. Bei der Effektbeleuchtung erfolgt zur Vermeidung von Blendeffekten eine relativ schwache Ausleuchtung, insbesondere eines Herstellerlogos, bevorzugt farblich abgestimmt auf die Lichtfarbe der sonstigen Instrumentenbeleuchtung (die ja häufig rot, grün oder blau ist). Die beiden Beleuchtungsszenarien werden bevorzugt mittels verschiedener Sätze von LEDs realisiert.

Vorzugsweise entspricht die Dicke der Fußraumleuchte im Wesentlichen der Dicke der Fußmatte. D.h., die leuchtende ebene Oberseite der Fußraumleuchte liegt im Wesentlichen in einer Ebene mit der Oberseite der Fußmatte, wenn die Fußmatte in der richtigen Position im Fußraum liegt, wobei die Fußraumleuchte den Ausschnitt in der Fußmatte ausfüllt. Vorzugsweise nimmt die leuchtende ebene Oberseite der Fußraumleuchte außerdem eine Fläche ein, die zwischen 1/5 und 1/50, insbesondere zwischen 1/10 und 1/20, der Fläche der Fußmatte beträgt, und sie hat vorzugsweise einen ungefähr rechteckigen Umriss, bevorzugt jenen eines Rechtecks mit gerundeten Ecken.

Die erfindungsgemäße Fußraumleuchte kann als Einbausatz (Fahrzeug-Zubehör) für Kfz/Nutzfahrzeuge ausgebildet sein. Ein derartiger Einbausatz kann vorzugsweise eine flache Kunststoff-Unterschale zur Befestigung auf dem Fußraumboden, eine form- und/oder kraftschlüssig auf die Unterschale passende flache transparente Kunststoff-Oberschale, die vorzugsweise aus Acrylglas besteht, und ein zwischen die Unterschale und die Oberschale passendes Leuchtmittel für flächige diffuse Lichtabgabe durch die transparente Oberschale hindurch enthalten.

Das Leuchtmittel ist vorzugsweise eine an sich bekannte Kunststoff-Lichtleitplatte mit mindestens einem von der Seite in die Lichtleitplatte einstrahlenden LED-Streifen, wobei die gewünschte Lichtstreuwirkung durch die Lichtleitplatte selbst und/oder durch eine zusätzliche Streufolie erzeugt werden kann. Das Leuchtmittel kann aber auch irgendein anderes flaches, flächig und diffus leuchtendes Leuchtmittel sein, etwa solche, wie man sie in unterschiedlichen Bauarten für Display-Hintergrundbeleuchtungen verwendet.

Vorzugsweise umfasst der Einbausatz, je nach Bodenteppichaufbau, außerdem genormte selbstarretierende Befestigungselemente, insbesondere in Form je eines Bolzens sowie einer Scheibe, die sich am Bolzenschaft verklemmt, wenn sie hierauf aufgeschoben wird bzw. selbstschneidende Teppichdübel, eine zwischen das Leuchtmittel und die Oberschale passende und mit mindestens einem Motiv bedruckte Klarsichtfolie, eine auf die transparente Oberschale passende kratzfeste Abdeckung z.B. aus Edelstahl, eloxiertem Aluminium oder Laminatmaterial, welche mit vielen Ausschnitten versehen ist, in denen die Oberschale freiliegt, und einen den Umriss der Fußraumleuchte bedeckenden Rahmen, der in den dem Umriss der Fußraumleuchte entsprechenden Ausschnitt in der Fußmatte passt und dafür eingerichtet ist, flüssigkeitsdicht fest mit der Fußmatte verbunden zu werden. Zweckmäßigerweise wird der Rahmen derart gestaltet, dass dieser auch zur Fußraumleuchte hin abdichtet, wobei diese Dichtung jedoch trennbar sein muss, um die Fußmatte zum Reinigen herausnehmen zu können. Der Rahmen besteht aus einem flexiblen Kunststoffmaterial, das gute Verklebe- und Verschweißeigenschaften besitzt.

Vorzugsweise bilden die genannten Teile des Einbausatzes mit Ausnahme der Befestigungselemente und des Rahmens eine Fußraumleuchte als eine vormontierte Baugruppe.

Zum Einbau der Fußraumleuchte in ein Kraftfahrzeug wird die gewünschte Fußmatte herausgenommen und ein passender flächiger Ausschnitt darin hergestellt, in den vorzugsweise der den Umriss der Fußraumleuchte bedeckende Rahmen flüssigkeitsdicht eingeklebt oder z.B. mittels Hochfrequenzschweißen eingeschweißt wird, damit später keine Flüssigkeiten od. dgl. von der Oberfläche der Fußmatte auf den darunter liegenden Bodenteppich gelangen können.

Danach wird die Fußraumleuchte in den Rahmen eingesetzt, und die Fußmatte wird auf dem Fußraumboden ausgerichtet und dann wieder abgehoben, während die Fußraumleuchte an Ort und Stelle gehalten wird.

Die Fußraumleuchte wird in dieser Position auf dem Fußraumboden befestigt. Vorzugsweise werden dazu bolzenförmige Befestigungselemente von unten durch den vom Fahrzeugboden abgelösten Bodenteppich gesteckt, woran die Fußraumleuchte mittels an den Bolzenschäften einrastenden Scheiben befestigt bzw. von oben mit selbstschneidenden Teppichdübeln befestigt wird. Während der Bodenteppich vom Fußraumboden gelöst ist, kann eine geeignete Stromversorgungsleitung für die Fußraumleuchte verlegt werden.

Anschließend wird die Fußmatte in der richtigen Position auf den Bodenteppich gelegt. In dieser Position wird der Ausschnitt bzw. der Rahmen in der Fußmatte durch die Fußraumleuchte seitlich fixiert. Zusätzlich kann die Fußmatte mittels der im Fahrzeug vorhandenen Fußmattenbefestigungen am Bodenteppich befestigt werden.

Das vorstehend allgemein und weiter unten detaillierter beschriebene Einbauverfahren eignet sich besonders zum Nachrüsten von Kraft/Nutzfahrzeugen mit einer erfindungsgemäßen Fußraumleuchte. Die Erfindung kann aber auch in der Serienfertigung von Kraft/Nutzfahrzeugen Anwendung finden, wobei das Einbauverfahren nach Bedarf modifiziert werden kann.

Es folgt eine Beschreibung eines Ausführungsbeispiels anhand der Zeichnungen. Darin zeigen:
- Fig. 1: eine Perspektiv-Explosionsansicht einer Fußraumleuchte zur Integration in eine Fußmatte auf einem Kraftfahrzeug-Bodenteppich;
- Fig. 2: eine ähnliche Ansicht wie in Fig. 1 aus einer anderen Perspektive, die aber nur die Teile eines Einbausatzes für die Fußraumleuchte zeigt;
- Fig. 3: eine verkleinerte Perspektivansicht eines Bodenteppichs mit darauf befestigter Fußraumleuchte und einer für Integration der Fußraumleuchte gestalteten Fußmatte in einem Abstand übereinander;
- Fig. 4: eine der Fig. 3 entsprechende Perspektivansicht, wenn die Fußmatte auf dem Bodenteppich aufliegt; und
- Fig. 5: eine im Wesentlichen Fig. 1 entsprechende Perspektiv-Explosionsansicht einer Fußraumleuchte, in der zusätzlich eine alternative Befestigungsmöglichkeit mittels Teppichdübeln dargestellt ist.

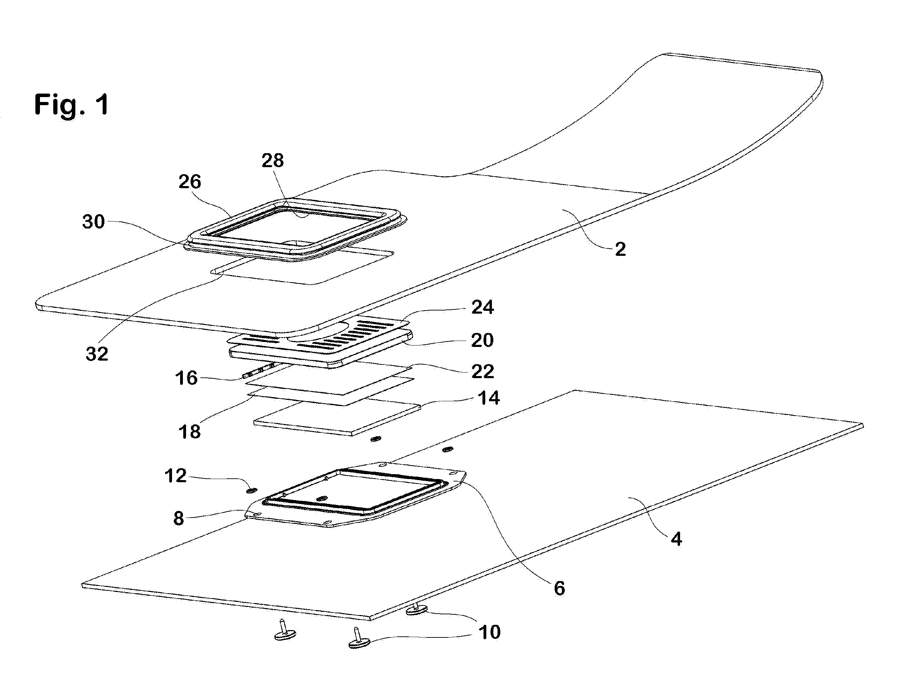

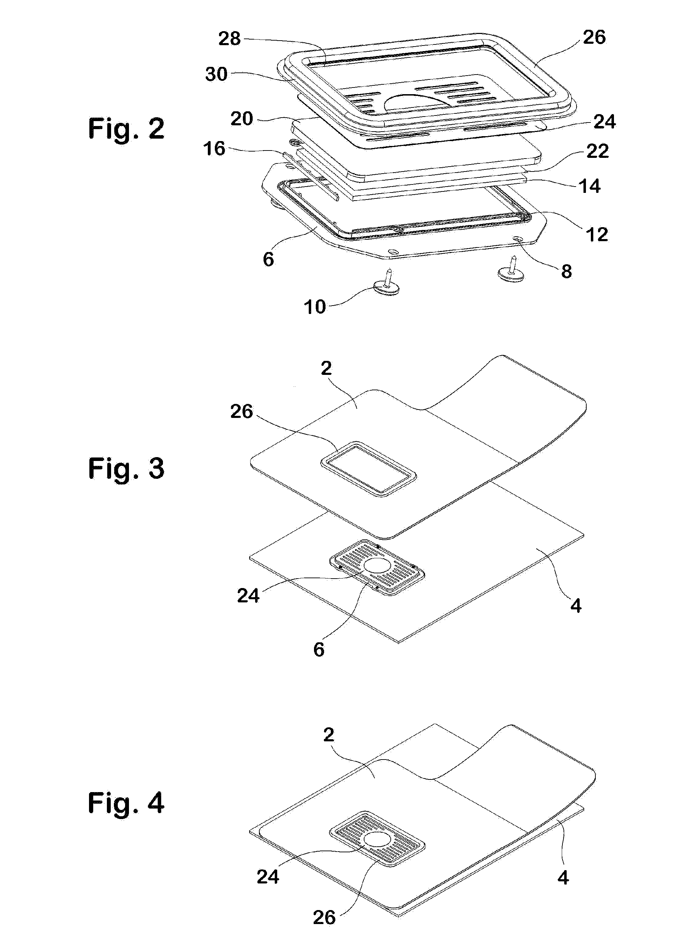

Wie in den Figuren 1 und 2 gezeigt, enthält eine Fußraumleuchte zur Integration in eine Fußmatte 2 auf einem Kraft/Nutzfahrzeug-Bodenteppich 4 eine flache Kunststoff-Unterschale 6 zur Befestigung auf dem Bodenteppich 4.

Entlang der vorstehenden Ränder der Unterschale 6 verteilen sich vier seitliche Bohrungen 8 für genormte Befestigungselemente in Form von vier Befestigungsbolzen 10 und dazu passenden Befestigungsscheiben 12, die sich am Bolzenschaft verklemmen, wenn man sie auf einen Befestigungsbolzen 10 aufschiebt. Derartige Befestigungselemente gibt es z.B. in Form von Kunststoffbolzen mit glattem Schaft und dazu passenden Klemmscheiben, die nur in einer Richtung über den Schaft geschoben werden können.

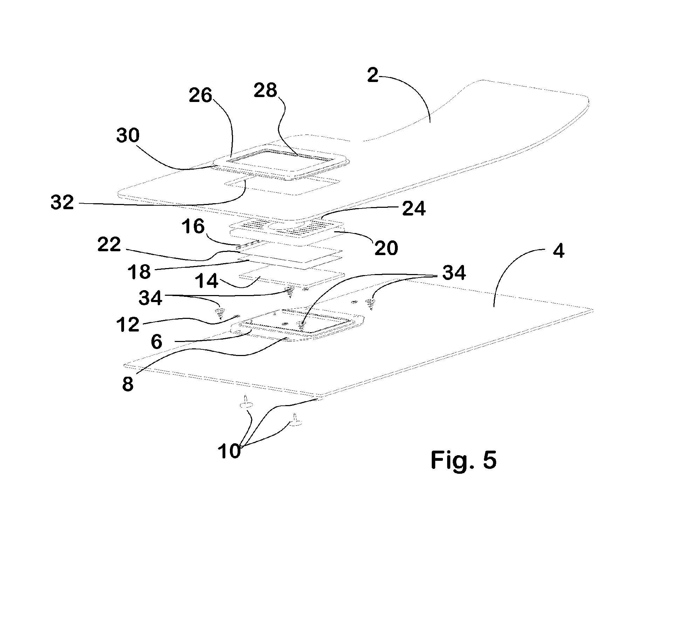

Alternativ könnte der Bolzen irgendwelche Arretierungsvorsprünge tragen, hinter denen eine geeignete Befestigungsscheibe einrastet oder aber komplett durch einen von oben einschraubbaren und selbstschneidenden Teppichdübel 34 (vgl. Fig. 5) ersetzt werden.

Der Bodenteppich 4, der den Fußraumboden des Kraftfahrzeugs bildet, ist fest im Fahrzeug verlegt, wobei er u.a. durch eine Seitenschwellerabdeckung festgehalten wird. Ferner ist die Fußmatte 2 mit nicht gezeigten lösbaren Befestigungsmitteln, die ein Verrutschen der Fußmatte 2 verhindern, auf dem Bodenteppich 4 anbringbar.

Die Fußraumleuchte enthält außerdem ein flaches, flächig und diffus leuchtendes Leuchtmittel, das im Ausführungsbeispiel aus einer einige Millimeter dicken, etwas mehr als 10 Zentimeter breiten und ca. 20 Zentimeter langen transparenten Kunststoff-Lichtleitplatte 14, einem an einer Seite der Lichtleitplatte 14 eng anliegenden und Licht in die Lichtleitplatte 14 einstrahlenden LED-Streifen 16, der so schmal ist wie die Lichtleitplatte 14 dick ist, und einer die Oberseite der Lichtleitplatte 14 bedeckenden Streufolie 18 aus PVC besteht. Die Streufolie 18 hat eine glatte Seite und eine raue Seite, die das von der Lichtleitplatte 14 darin eintretende Licht diffus streut.

Wenn die Lichtleitplatte 14 selbst eine gewisse Lichtstreuwirkung hat, z.B. durch eine raue Oberseite, wirkt sie auch als eine Streuscheibe, und wenn diese ausreichende Lichtstreuwirkung hat, kann auf eine zusätzliche Streufolie 18 verzichtet werden, wie in der Ansicht von Fig. 2.

Die Fußraumleuchte enthält außerdem eine form- und/oder kraftschlüssig auf die Unterschale 6 passende flache transparente Oberschale 20 aus Acrylglas, deren seitlicher Umriss ein Rechteck mit gerundeten Ecken ist. Die Unterschale 6 und die Oberschale 20 können das Leuchtmittel aus Kunststoff-Lichtleitplatte 14, LED-Streifen 16 und Streufolie 18 zwischen sich aufnehmen, wenn sie zusammengefügt sind. Falls eine LED-Ansteuerschaltung erforderlich ist, kann auch diese darin aufgenommen sein. Wird der LED-Streifen 16 mit Strom versorgt, leuchtet das Leuchtmittel diffus durch die transparente Oberschale 20 hindurch nach oben. Dabei kann es eine zwischen der Streufolie 18 und der Oberschale 20 liegende Klarsichtfolie 22 durchstrahlen, welche mit einem durchscheinenden Motiv bedruckt ist, das z.B. das Emblem des Fahrzeugherstellers sein kann.

Die Oberseite der transparenten Oberschale 20 ist vollflächig mit einer Abdeckung 24 bedeckt, welche mit verschiedenen Ausschnitten versehen ist, in denen die Oberschale 20 freiliegt. In diesem Beispiel enthält die Abdeckung 24 einem mittleren runden Ausschnitt, worin im zusammengebauten Zustand das Herstelleremblem zu sehen ist, und viele parallele längliche Ausschnitte, die sowohl dekorativ wirken als auch die Oberschale 20 gegen Verkratzen schützen. Die Abdeckung 24 sollte kratzfest sein und kann z.B. aus Edelstahl, eloxiertem Aluminium oder geeignetem Laminatmaterial bestehen. Auch die Oberseite der transparenten Oberschale 20 sollte natürlich ebenfalls möglichst kratzfest sein, was bei Acrylglas gegeben ist.

Auf die transparente Oberschale 20 einschließlich deren Abdeckung 24 passt formschlüssig ein dem Umriss der Fußraumleuchte entsprechender rechteckiger Rahmen 26, der z.B. aus Kunststoff, Edelstahl oder eloxiertem Aluminium besteht und der eine innen umlaufende Dichtung 28 aufweist, z. B. eine plastische Dichtmasse oder eine Gummilippe, die flüssigkeitsdicht gegen die Abdeckung 24 drückt, wenn der Rahmen 26 auf die Oberschale 20 aufgesetzt wird.

Am Außenumfang des Rahmens 26 ist eine ringsum umlaufende Nut 30 ausgebildet, deren Außenumriss dem Innenumriss eines entsprechenden rechteckigen Ausschnitts 32 in der Fußmatte 2 gleicht. Weil die Fußmatte 2 biegsam ist, kann der Rahmen 26 mit seiner Nut 30 formschlüssig in den Ausschnitt 32 in der Fußmatte 2 eingefügt werden.

Die Unterschale 12, die Lichtleitplatte 14, der LED-Streifen 16, die Streufolie 18, die Oberschale 20, die Klarsichtfolie 22 und die Abdeckung 24 bilden in diesem Ausführungsbeispiel eine Fußraumleuchte als eine vormontierte Baugruppe, deren Teile durch Form- und/oder Kraftschluss zusammenhalten können und/oder miteinander verklebt sein können. Einige oder alle Teile dieser Baugruppe können aber auch demontierbar bzw. wechselbar ausgebildet sein.

Zum (insbesondere nachträglichen) Einbau der Fußraumleuchte in ein Kraftfahrzeug wird die Fußmatte 2 des mit Beleuchtung zu versehenden Fußraums vom Bodenteppich 4 gelöst und herausgenommen, um den rechteckigen Ausschnitt 32 daraus auszuschneiden. Der Rahmen 26 wird mit seiner Nut 30 in den Ausschnitt 32 eingesetzt und flüssigkeitsdicht darin eingeschweißt oder eingeklebt. Danach wird die vormontierte Leuchten-Baugruppe in den Rahmen 26 eingesetzt, so dass ihre Leucht-Oberseite im Wesentlichen in einer Ebene mit der Oberseite der Fußmatte 2 liegt.

Anschließend wird die Fußmatte 2 mit eingesetzter Fußraumleuchte in ihrer richtigen Position auf den Bodenteppich 4 gelegt und dann wieder abgezogen, während die Fußraumleuchte mit der Hand auf dem Bodenteppich 4 festgehalten wird. Danach werden die Positionen von zu den Bohrungen 8 in der Unterschale 6 passenden Löchern für die Befestigungsbolzen 10 in der Fußmatte 2 angezeichnet. Die Fußraumleuchte wird dann zunächst wieder vom Bodenteppich 4 entfernt.

Nach Demontage der Seitenschwellerabdeckung wird je nach Montagemittel entweder der Bodenteppich 4 zumindest teilweise vom Fahrzeugboden abgelöst und an den angezeichneten Stellen mit einem geeigneten Dorn durchstoßen, je ein Befestigungsbolzen 10 von unten durch den Bodenteppich 4 gesteckt und mit einer Arretierungsscheibe befestigt, oder aber direkt von oben durch die Öffnungen 8 der Unterschale 6 der Gesamtbaugruppe mittels selbstschneidender Teppichdübel 34 verschraubt, die in Fig. 5 - zusätzlich zu den in dieser Befestigungskonfiguration nicht benötigten Befestigungsbolzen 10 bzw. Arretierungsscheiben 12 - gezeigt sind.

Parallel wird ein Loch zum Durchführen einer Stromversorgungsleitung hergestellt, die man z.B. unter dem Bodenteppich 4 zum Seitenschweller und dann weiter zu einer Stromversorgungsleitung für das Innenraumlicht verlegt. Alternativ kann die Stromversorgungsleitung z.B. zu einem Miniaturdruckschalter führen, der zwischen Fahrzeugtür und Türdichtung montiert wird, damit die Fußraumleuchte nur beim Öffnen der zugehörigen Fahrzeugtür leuchtet. Falls die Fußraumleuchte über eine eingebaute Stromversorgung z.B. in Form von Knopfzellen verfügt, ist natürlich keine Stromversorgungsleitung erforderlich. In diesem Fall könnte die Fußraumleuchte auch durch ein in den Rahmen 26 integriertes druck- oder näherungssensitives Schaltelement eingeschaltet und z.B. zeitgesteuert wieder ausgeschaltet werden.

Abschließend erfolgt die Wiederanbringung des Bodenteppichs 4 durch Befestigung der Seitenschwellerabdeckung und der elektrische Anschluß der unter dem Bodenteppich 4 verlegten Stromversorgungsleitung.

Zuletzt wird die Fußmatte 2 mit dem Rahmen 26 von oben (Fig. 3) über die Fußraumleuchte gestülpt (Fig. 4), so dass die Oberseiten der Fußmatte 2 und der Fußraumleuchte in einer Ebene liegen, wobei die Dichtung 28 im Rahmen 26 gegen die Fußraumleuchte abdichtet. Die Fußmatte 2 ist dann durch Formschluss mit der Fußraumleuchte gegen seitliches Verrutschen gesichert.

Wie man in Fig. 3 erkennt, muss die Unterschale 6 etwas größer sein als die übrigen flächigen Teile der Leuchten-Baugruppe, um eine Lücke für die Befestigungselemente 10, 12 bereitzustellen, welche dem Abstand zwischen der Oberschale 20 bzw. deren Abdeckung 24 und dem Innenumriss des Ausschnitts 32 in der Fußmatte 2 entspricht. Der Rahmen 26 muss diese Lücke überdecken und noch etwas breiter sein. Die Verwendung der selbstarretierenden Befestigungselemente 10, 12 ermöglicht es, diese Lücke sehr klein zu gestalten, so dass auch der Rahmen 26 relativ schmal gehalten werden kann, was dem optischen Erscheinungsbild zugute kommt. Der Rahmen 26 hat im Ausführungsbeispiel aber nicht nur eine Abdeckungsfunktion, sondern vermittelt auch den wesentlichen Formschluss zwischen dem Ausschnitt 32 in der Fußmatte 2 und der Fußraumleuchte. Der Formschluss könnte aber auch auf andere Weise bestehen, z. B. nur zwischen dem Ausschnitt und der Unterschale 6.

Der über die Oberseiten der Fußmatte 2 und der Fußraumleuchte nach oben vorstehende Teil des Rahmens 26 kann sehr flach ausgebildet werden, so dass er praktisch nicht stört. Wie man in Fig. 4 erkennt, sind in der Einbauposition von der Fußraumleuchte nur die Abdeckung 24, die durch die Abdeckung hindurch sichtbaren Bereiche der Oberschale 20 und der Rahmen 26 sichtbar.

Die Fußmatte 2 kann zusätzlich mittels der im Fahrzeug vorhandenen Fußmattenbefestigungen am Bodenteppich 4 befestigt werden. In jedem Fall kann die Fußmatte 2 zu Reinigungszwecken entnommen werden und danach leicht und formschlüssig dicht wieder eingesetzt werden.

Die beschriebene Fußraumleuchte muss natürlich gegen Trittbelastung ausreichend stabil sein, was aber mit den vorgeschlagenen Materialien und Konstruktionsweisen leicht zu gewährleisten ist.

## Patentansprüche

1. Fußraumleuchte (6, 14, 16, 18, 20, 22, 24) zum Beleuchten des Fußraums eines Kraftfahrzeugs, welche dafür eingerichtet ist, in eine Fußmatte (2) für einen Fußraumboden (4) des Kraftfahrzeugs integriert zu werden,
**dadurch gekennzeichnet, dass**
die Fußraumleuchte (6, 14, 16, 18, 20, 22, 24) als eine flache, flächig und im Wesentlichen diffus leuchtende Leuchte ausgebildet ist, die dafür eingerichtet ist, mit ihrer Unterseite innerhalb des für die Fußmatte (2) vorgesehenen Fußraumbodenbereichs fest auf dem Fußraumboden (4) des Kraftfahrzeugs angebracht zu werden, und die außerdem dafür eingerichtet ist, einer Fußmatte (2), die mit einem dem Umriss der Fußraumleuchte entsprechenden Ausschnitt (32) versehen ist, durch Formschluss Seitenhalt zu geben.

2. Fußraumleuchte (6, 14, 16, 18, 20, 22, 24) nach Anspruch 1,
**dadurch gekennzeichnet, dass**
die Dicke der Fußraumleuchte (6, 14, 16, 18, 20, 22, 24) im Wesentlichen der Dicke der Fußmatte (2) entspricht.

3. Fußraumleuchte (6, 14, 16, 18, 20, 22, 24) nach Anspruch 1 oder 2,
**dadurch gekennzeichnet, dass**
die Fußraumleuchte (6, 14, 16, 18, 20, 22, 24) eine leuchtende ebene Oberseite hat, die eine Fläche einnimmt, die zwischen 1/5 und 1/50, insbesondere zwischen 1/10 und 1/20, der Fläche der Fußmatte (2) beträgt, und insbesondere einen ungefähr rechteckigen Umriss hat.

4. Fußraumleuchte (6, 14, 16, 18, 20, 22, 24) nach einem der vorhergehenden
Ansprüche,
**dadurch gekennzeichnet, dass**
die Fußraumleuchte (6, 14, 16, 18, 20, 22, 24) als ein Einbausatz ausgebildet ist, der mindestens die folgenden Teile umfasst:
- eine flache Unterschale (6) zur Befestigung auf dem Fußraumboden;
- eine form- und/oder kraftschlüssig auf die Unterschale passende flache transparente Oberschale (20); und
- ein zwischen die Unterschale (6) und die Oberschale (20) passendes Leuchtmittel (14, 16, 18) für eine flächige diffuse Lichtabgabe durch die transparente Oberschale (20) hindurch.

5. Fußraumleuchte (6, 14, 16, 18, 20, 22, 24) nach Anspruch 4,
**dadurch gekennzeichnet, dass**
der Einbausatz außerdem eines oder mehrere der folgenden Teile umfasst:
- selbstarretierende Befestigungselemente (10, 12; 34) zum Befestigen der Unterschale (6) auf dem Fußraumboden (4);
- eine zwischen das Leuchtmittel (14, 16, 18) und die Oberschale (20) passende und mit mindestens einem Motiv bedruckte Klarsichtfolie (22);
- eine auf die Oberschale (20) passende kratzfeste Abdeckung (24), welche mit vielen Ausschnitten versehen ist, in denen die Oberschale (20) freiliegt;
und
- einen den Umriss der Fußraumleuchte (6, 14, 16, 18, 20, 22, 24) bedeckenden Rahmen (26), der in den dem Umriss der Fußraumleuchte (6, 14, 16, 18, 20, 22, 24) entsprechenden Ausschnitt (32) in der Fußmatte (2) passt und dafür eingerichtet ist, flüssigkeitsdicht fest mit der Fußmatte (2) verbunden zu werden.

6. Fußraumleuchte (6, 14, 16, 18, 20, 22, 24) nach Anspruch 4 oder 5, **dadurch gekennzeichnet, dass**
die genannten Teile des Einbausatzes mit Ausnahme der Befestigungselemente (10, 12; 34) und des Rahmens (26) eine vormontierte Baugruppe (6, 14, 16, 18, 20, 22, 24) bilden.

7. Verfahren zum Einbauen einer Fußraumleuchte (6, 14, 16, 18, 20, 22, 24)
in ein Kraftfahrzeug,
**dadurch gekennzeichnet, dass**
das Verfahren mindestens die folgenden Verfahrensschritte umfasst:
- Herstellen eines flächigen Ausschnitts (32) in einer Fußmatte (2) des Kraftfahrzeugs;
- Einsetzen einer Fußraumleuchte (6, 14, 16, 18, 20, 22, 24) in den Ausschnitt (32), wobei die Fußraumleuchte (6, 14, 16, 18, 20, 22, 24) als eine flache, flächig leuchtende Leuchte ausgebildet ist, die im Wesentlichen ebenso dick wie die Fußmatte ist und den Ausschnitt (32) in der Fußmatte (2) im Wesentlichen ausfüllt;
- Ausrichten der Fußmatte (2) auf einem Fußraumboden (4) des Kraftfahrzeugs;
- Abziehen der Fußmatte (2), während die Fußraumleuchte (6, 14, 16, 18, 20, 22, 24) in ihrer Position auf dem Fußraumboden (4) niedergehalten wird;
- Befestigen der Fußraumleuchte (6, 14, 16, 18, 20, 22, 24) auf dem Fußraumboden (4); und
- Auflegen der Fußmatte (2) auf den Fußraumboden (4) derart, dass der Ausschnitt (32) die Fußraumleuchte (6, 14, 16, 18, 20, 22, 24) formschlüssig umgibt und die leuchtende ebene Oberseite der Fußraumleuchte (6, 14, 16, 18, 20, 22, 24) im Wesentlichen in einer Ebene mit der Oberseite der Fußmatte (2) liegt.

8. Verfahren nach Anspruch 7,
**dadurch gekennzeichnet, dass**
das Verfahren außerdem umfasst:
- nach dem Herstellen des flächigen Ausschnitts (32) in der Fußmatte (2), flüssigkeitsdichtes Anbringen eines Rahmens (26), der den Umriss der Fußraumleuchte (6, 14, 16, 18, 20, 22, 24) bedeckt, in dem Ausschnitt (32);
und/oder
- Befestigen der Fußraumleuchte (6, 14, 16, 18, 20, 22, 24) mittels selbstarretierender Befestigungselemente (10, 12; 34) auf dem Fußraumboden (4).

9. Verfahren nach Anspruch 7 oder 8,
**dadurch gekennzeichnet, dass**
die Fußraumleuchte (6, 14, 16, 18, 20, 22, 24) gemäß einem der Ansprüche 1 bis 6 ausgebildet ist.
